# EUROPEAN PATENT APPLICATION

(11) **EP 1 845 487 A2**
(43) Date of publication of application: **17.10.2007**
(21) Application number: 07105957.0
(22) Date of filing: 11.04.2007
(51) Int. Cl.: G06Q 10/00

(54) **Forms for business case management**

(30) Priority: 11.04.2006 US 279349
(71) Applicant: Xerox Corporation, Rochester, NY 14644 (US)
(72) Inventor: Austin, Paul R., Webster, NY 14580 (US); Slein, Judith A., Rochester, NY 14617 (US)
(74) Representative: Grünecker, Kinkeldey, Stockmair & Schwanhäusser Anwaltssozietät

(57) **Abstract**

Methods and systems for providing workflow response information and managing a case workflow are disclosed. Documents for a case may be received, requested and/or assembled into a case record by a document server. If additional information is required with respect to a document, an electronic notification message containing a form with one or more response fields may be transmitted to an agent. The form may be written in a rules-based language that is interpretable by a computer system, such as XML. Response information may be received from the agent by entering it into the one or more response fields. The response information may be transmitted to the document server in an electronic response message, and a case record may be updated with the response information. The document server may determine whether additional documents or human interaction is required based on the updated case record.

## Description

The disclosed embodiments relate to methods and systems for document workflow management.

Workflow management is an organizational tool used to track documents and the level of completion of such documents over time. Typically, a collection of documents supporting the making of a decision are assigned to a particular case. A case could be a legal matter, a mortgage application, an insurance claim, and/or any process that requires the completion and/or submission of one or more documents. The documents are completed based on one or more rules embodying the business practices that lead to a decision.

Typically, workflow management is performed as a manual process in which one or more individuals work together to collect information for a case. A manager might be assigned to a case to oversee its workflow. Workflow management is typically performed to coordinate the efforts of the one or more individuals and to disclose an overall status of the case to the one or more individuals. As such, workflow management can reduce the likelihood that a single participant delays the case for an extended period of time.

In some instances, portions of a workflow management process are performed in an automated fashion. In such semi-automated workflow processes, the automated interfaces with human participants are typically in the form of alarms, email notes and/or voice mail messages that require the participants to access separate tools to perform the assigned tasks. As such, the effect of automating the process provides little benefit to the participants other than to inform them that completion of a task is required. An exemplary semi-automated workflow management process is described in U.S. Patent No. 7,000,179 to Yankovich et al., which is incorporated herein by reference in its entirety.

The Extensible Markup Language (XML) is a general-purpose markup language for creating special-purpose markup languages, capable of describing many different kinds of data. XML uses text to describe and apply a tree-based structure to information. All information is represented by text, interspersed with markup indicating the information's separation into a hierarchy of character data, container-like elements and attributes of those elements. XML is typically used to facilitate the sharing of data across different systems, such as systems connected via a computer network, such as the Internet and/or an intranet.

The fundamental unit in XML is the character. Characters are combined in certain allowable combinations to form, for example, an XML document, which includes one or more entities. Each entity includes some portion of the document's characters and is encoded as a series of bits.

XML provides a syntactic foundation for the creation of custom, XML-based markup languages by leaving the names, allowable hierarchy, and meanings of the elements and attributes open and definable by a customizable schema. The general syntax of such languages is rigid in that documents must adhere to the general rules of XML to assure that all XML-aware software can parse and understand the relative arrangement of information within them.

An XML schema supplements the syntax rules with a set of constraints. The schema typically restricts element and attribute names and their permissible containment hierarchies. For example, an XML schema might allow an element named 'birthday' to contain one element named 'month' and one element named 'day,' each of which has to contain only character data. The constraints in a schema might also include data type assignments that affect how information is processed. For example, the 'month' element's character data might be defined as being a month according to a particular schema's conventions. This might require that the field be formatted a certain way and processed according to specific rules.

As such, XML contrasts with HTML, which has an inflexible, single-purpose vocabulary of elements and attributes that, in general, cannot be repurposed.

What are needed are an automated process and system for managing document workflow.

In an embodiment, a method of providing workflow response information may include receiving an electronic notification message containing a form including one or more response fields from a document server, receiving response information in the one or more response fields from an agent, and transmitting the response information to the document server in an electronic response message. The form may be written in a rules-based language that is interpretable by a computer system.

In an embodiment, a method of managing a case workflow may include receiving one or more first documents for a case at a case management system, determining whether one or more second documents are required for the case, retrieving the one or more second documents if such documents are required, and determining whether additional information is required for a case record that includes the first and second documents. If additional information is required, the method further includes transmitting an electronic notification message containing an form including one or more response fields to an agent, receiving an electronic response message from the agent in response to the electronic notification message, updating the case record based on the response information, and repeating the determining steps based on the updated case record. The form may be written in a rules-based language that is interpretable by a computer system, and the electronic response message may contain response information entered into the one or more response fields. If no additional information is required, the method may further include providing notification that the case record is complete.

In an embodiment, a system for managing a case workflow may include a processor, a processor-readable storage medium in communication with the processor, and a communication network in communication with the processor. The processor-readable storage medium may contain one or more programming instructions for performing a method of managing a case workflow. The method may include receiving one or more first documents for a case at a case management system, determining whether one or more second documents are required for the case, retrieving the one or more second documents if such documents are required, and determining whether additional information is required for a case record that includes the first and second documents. If additional information is required, the method further includes transmitting an electronic notification message containing an form including one or more response fields to an agent, receiving an electronic response message from the agent in response to the electronic notification message, updating the case record based on the response information, and repeating the determining steps based on the updated case record. The form may be written in a rules-based language that is interpretable by a computer system, and the electronic response message may contain response information entered into the one or more response fields. If no additional information is required, the method may further include providing notification that the case record is complete.

FIG. 1 depicts an exemplary method for managing a workflow process according to an embodiment.

FIG. 2 depicts an exemplary form according to an embodiment.

FIG. 3 depicts an exemplary case flow diagram according to an embodiment.

FIG. 4 depicts a flow diagram of an exemplary case management flow for a mortgage application according to an embodiment.

FIG. 5 is a block diagram of exemplary internal hardware that may be used to contain or implement program instructions according to an embodiment.

A case may include, for example and without limitation, a collection of documents supporting the making of a decision and a set of rules embodying business practices that, for example, lead to a decision. A rule may be triggered by a change in the state of the case and/or one or more of the documents assigned to the case. Exemplary case types may include, for example and without limitation, mortgage applications, insurance claims, new account applications, legal cases, medical cases, performance evaluations, policy and/or contract formations, new drug applications, regulatory compliance reviews and the like. In an embodiment, a case may be created for any document-intensive process.

When a rule is triggered, one or more actions may be performed. In an embodiment, a human agent may participate in responding to requests for completing such actions. Because XML is designed to be both human and machine readable, XML forms may conveniently mediate between human agents and software systems managing a case. As such, a notification to a human agent that the agent's participation is required may include an XML form. In an embodiment, rather than directing the human agent to a different location and/or tool to perform the required task, the notification may present the agent with a form that is used to perform the task. In an embodiment, the agent may enter data into the form. The form may then be sent to a software system, which receives and processes the entered data and determines additional actions, if any, to perform.

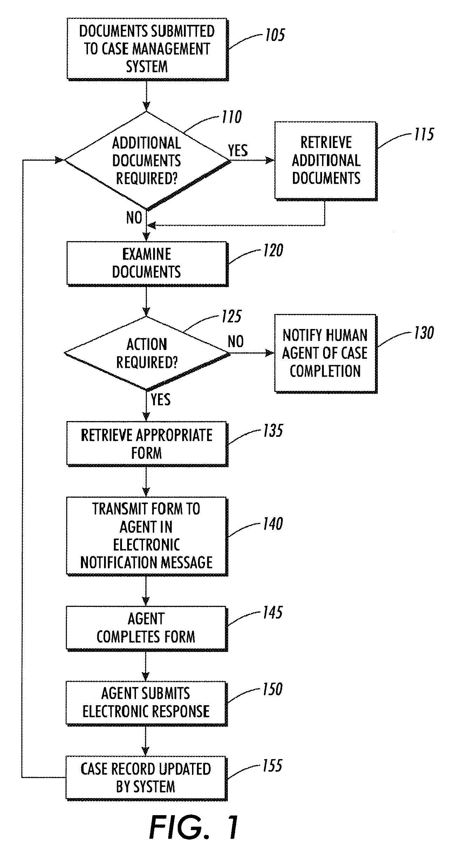

FIG. 1 depicts an exemplary method for managing a workflow process according to an embodiment. As shown in FIG. 1, one or more documents may be submitted **105** to, for example, a case management system to initiate a case. The case management system may determine **110** whether one or more additional documents are required to complete a case record based on the one or more documents submitted for the case. In an embodiment, the determination **110** may be made based upon a case type for the case. For example, if a mortgage application is submitted to initiate a case, a plurality of additional documents, such as a proof of insurance document, a deed and the like may be required to be included as part of the case record. If additional documents are required, the case management system may retrieve **115** one or more of the additional documents. In an embodiment, the case management system may assign a placeholder for a document if the document cannot be directly retrieved.

In an embodiment, documents may be retrieved from, for example, a document server. A document server may be a centralized repository containing, for example, form documents for all documents required for a case. In an embodiment, the document server may be computer-based. Each case may have one or more documents assigned to it and may retrieve additional documents during the course of the case management process.

In an embodiment, documents may be submitted by a human agent. For example, an applicant may submit an application to initiate a case. Other documents may also be submitted within the scope of this disclosure. Likewise, other human agents may submit documents within the scope of this disclosure.

In an embodiment, the document server may include a document management product, such as DocuShare^{™} developed by Xerox Corporation, which may provide a rich variety of document storage, retrieval and search capabilities. The document management product may also store metadata (i.e., data that describes a document). Metadata may include, without limitation, security information, authorship information and/or dates. The document management product may also facilitate adding additional metadata of interest to users.

Rules for managing a case may evaluate both the content and metadata associated with documents stored in the repository. Documents may be selected based on a document's context, such as if a document is part of a case collection; a predefined reference in the document, such as if common information is present such as current mortgage interest rates; and/or by searching the document repository contents for particular information, such as searching for a document of type W2, with SS# 123-45-6789 and extracting the withholding value. XML documents may greatly facilitate this search by making it possible to search for information only in a particular context. For example, a search may request documents authored by a particular person instead of documents written about that person.

The case management system may then examine **120** the one or more assembled documents and determine **125** whether a human agent is required to perform an action. The examination 120 of the one or more submitted documents may include parsing the documents. Parsing may include retrieving responses to one or more fields in a document and determining the meaning of the response in each field. For example, a parsing operation may retrieve an applicant's name from a document to determine which case the particular document is associated with. In an embodiment, a parsing operation may determine a requested amount for a loan from a loan application and a credit score for the applicant from a credit history request to determine an interest rate for a loan. Other parsing operations may also be performed within the scope of this disclosure.

The determination **125** of whether a human agent is required to perform an action may be based on one or more rules. Exemplary rules may include, for example and without limitation, determining whether information is required to complete a document, determining whether an additional document is required to complete the case, and/or determining one or more human agents capable of performing an action. For example, if a parsing operation retrieves a credit score from a credit history request and the credit score is less than a threshold, an additional document requesting credit-worthiness information for the applicant may be retrieved. The determination 125 regarding whether a human agent is required to perform a next action may be made based on, for example and without limitation, the information retrieved from the parsing operation **120.**

In an embodiment, if all actions have been completed for a case, the case management system may notify **130** a human agent that the case record is complete. The human agent may be notified **130,** for example and without limitation, via one or more of an email message, a text message, a voice mail message and/or a similar message and/or alert.

In an embodiment, a work queue including pending and/or completed actions may be maintained. Upon completion of a case, the work queue may be updated **130** to reflect that all documents have been submitted for the case. In an embodiment, a human agent may be provided with the ability to view the work queue. In an embodiment, a human agent may search the work queue and/or be provided with information pertaining to cases assigned to the human agent. The work queue may be provided to the human agent via, for example, an Internet portal.

In an embodiment, if additional information is required, the case management system may retrieve **135** an appropriate form and transmit **140** the form embedded within an electronic notification message to one or more agents. An agent may include one or more of a human agent and an electronic agent. In an embodiment, the form may comprise a form written in a rules-based language that is interpretable by any computer system. In an embodiment, the form may comprise an XML form.

In an embodiment, an XML form may include, for example, three parts: an XML description of the information, an XML constraint representation and a presentation description. The XML constraint representation may include a data format and/or relationships between different data items. For example, an XML constraint may state that salary information is not required for a loan applicant if the applicant's net worth exceeds a threshold. The presentation description may indicate the manner in which XML information is presented to, updated by and/or received from a user.

In an embodiment, transmitting **140** the electronic notification message may comprise transmitting one or more of an electronic message, a text message and/or the like containing the embedded form. In an embodiment, the form may include one or more fields for receiving data from an agent. In an embodiment, the electronic notification message may include one or more links to information that the receiving agent may use or refer to in order to complete the action.

In an embodiment, at least one agent receiving the electronic notification message may directly fill out **145** at least a portion of the embedded form and submit an electronic response message replying **150** to the case management system. The electronic response message may include the information submitted by the agent in response to the embedded form. In an embodiment, a form may detect one or more errors in the format and/or content of the response data entered by the agent and may request correction of the response data prior to submitting the electronic response message to the case management system.

The form may detect an error based on, for example, one or more constraints embedded in the form. For example, an instantiation of a field may assign one or more limitations to the types of information that may be provided as a response in a particular field. For example, if a date field entry is required, a field instantiation may require that entered data be in a "MMDDYY" or a "MMDDYYYY" format and that the entered data include only numeric values. Other constraints, such as length limitations, language limitations and the like, may also be placed on a data field entry within the scope of this disclosure. In an embodiment, constraints may be encapsulated in an XML description for a field, which places the one or more constraints on the field using an XML definition.

Constraints in an XML form may be defined as either fixed constraints or computed expressions. Fixed constraints may be evaluated once and typically encode type information. Computed expressions may provide a value that is recomputed over time. Such expressions may encode dynamic constraints such as the dependency among various data items including items other than the data item to which the computed expression applies.

Constraints may include, for example and without limitation, a data type, whether a value is read only, whether a value is required before data is submitted, whether particular data is relevant, an expression used to calculate the value of associated data, a test condition that must be satisfied before data is considered to be valid, and the like. Additional and/or alternate constraints may also be used within the scope of this disclosure.

In an embodiment, one or more of the electronic messages may be encrypted and/or digitally signed to secure the contents of the message. _{[0]}A digital signature may be used as a security measure to restrict unauthorized individuals from accessing and/or altering a message. In an embodiment, the electronic response message may comprise response data containing one or more instructions for the case management system. The one or more instructions may instruct the case management system to perform one or more operations.

The case management system may update **155** the case record based on the electronic response message and may again determine **125** whether an agent is required to perform one or more additional actions. In an embodiment, the case management system may also determine **110** whether one or more additional documents are required to complete the case record.

In an embodiment, criteria for determining when to change state within the case management system may include, without limitation, an elapsed period of time, receiving pertinent information via email, web based forms, scanned paper forms, and/or the like, and/or other actions. A change in state may result in one or more forms being sent to one or more recipients. A change in state may also result in a completed set of documents.

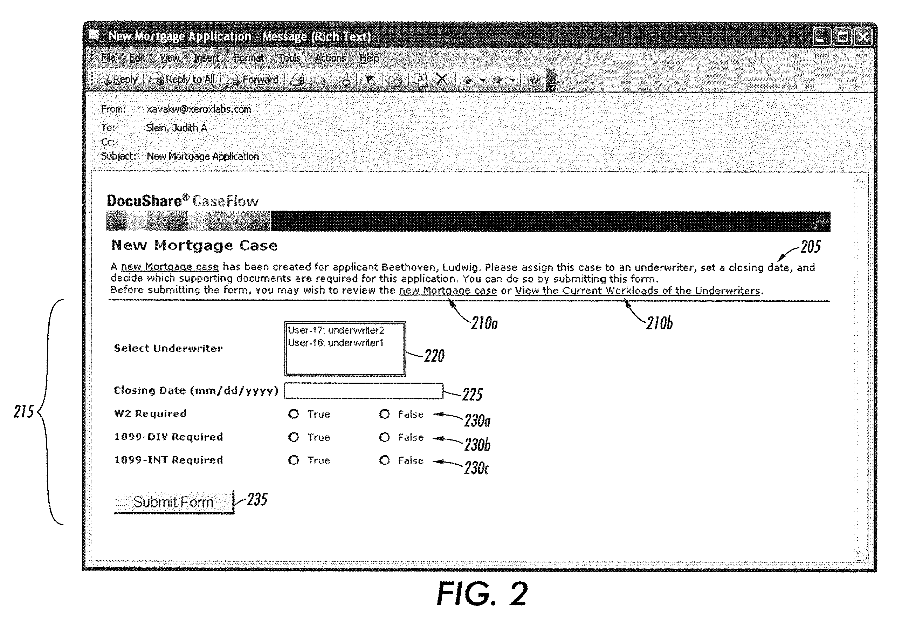

FIG. 2 depicts an exemplary form according to an embodiment. The form depicted in FIG. 2 may be embedded in an electronic notification message and sent to one or more human agents. The electronic notification message may contain one or more instructions **205** defining actions to be performed by the human agent; one or more links, such as **210a** and **210b,** to supporting information that the human agent may use to make a decision and/or complete the form; and an embedded form **215,** such as an XML form, used to communicate one or more decisions to a case management system. In an embodiment, the embedded form may include a field permitting the selection of one or more choices, such as **220.** In an embodiment, the embedded form may include a field permitting text entry, such as **225.** In an embodiment, the embedded form may include one or more radio buttons, such as **230a-c,** which each permit the selection of one of a plurality of choices. Other selection mechanisms may also be included in the form within the scope of the present disclosure. The form may further include a submission button **235** used to generate an electronic response message based on response information entered into the form by the human agent. The response message may be transmitted to the case management system for further processing.

In an embodiment, an administrator may display and/or modify status information for one or more cases in a case management system. The administrator may display status information for one or more cases based on query information. For example, the administrator may request that all cases having a particular state and/or all cases being worked on by a particular human agent be displayed. Alternate and/or additional search criteria may also be used within the scope of this disclosure.

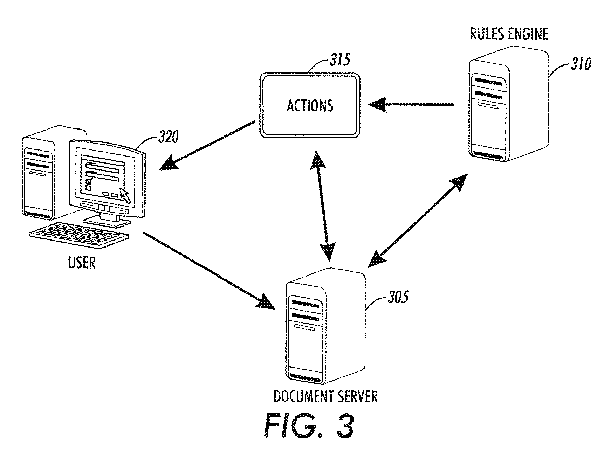

FIG. 3 depicts an exemplary case flow diagram according to an embodiment. As shown in FIG. 3, a document server **305** may include one or more documents. When a new case is opened, the document server **305** may inform a rules engine **310** of the new case. The rules engine **310** may determine that one or more actions **315** should be performed based on the type of case. An action **315** may include, for example and without limitation, associating a new document with the case by accessing the document server **305** and/or submitting a form to a user **320** for completion. The form may be embedded in an electronic message sent to the user **320.** The user may complete the form, which may have one or more rules associated with it, and may return the completed form to the document server **305.** The document server **305** may update one or more documents associated with the form. The document server **305** may again alert the rules engine **310** to determine if additional actions **315** should be performed.

### EXAMPLE

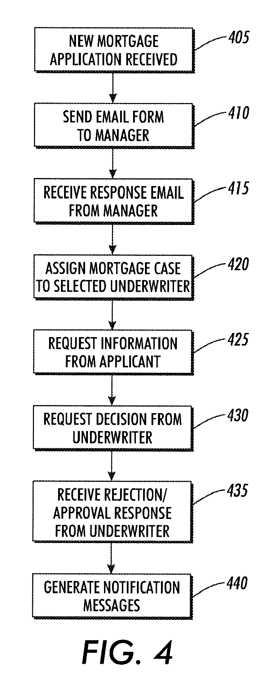

FIG. 4 depicts a flow diagram of an exemplary case management flow for a mortgage application according to an embodiment. As shown in FIG. 4, a new mortgage application case may be received **405** by a document server, which may inform a rules engine of the new mortgage application case. The rules engine may initiate an action resulting in an email form being sent **410** to a manager. The manager may view, for example, the new mortgage application case documents and the workloads of one or more underwriters that can be assigned to the case. The manager may then complete the form and submit **415** it to the document server. Completing the form may require the manager to select one or more underwriters to work on the case and to provide information pertaining to the case, such as a closing date and a list of particular forms required from the applicant.

A new action may be generated **420** that assigns the particular mortgage case to the selected underwriter. The assignment may be performed by sending an email message to the underwriter. In addition, a second email message may be sent **425** to the applicant requesting submission of the required forms. As the required forms are returned by the applicant, additional alert emails may be sent to the underwriter and/or the applicant.

Once all of the required documents have been received, an email message may be sent **430** to the underwriter requesting a decision on the mortgage application. The email message may include, for example and without limitation, a selectable link to the assembled documents and/or relevant information from such documents to assist the underwriter in making an approval decision for the application, and a form requesting an approval/rejection response. Reminder emails may be sent, if necessary, as the closing date nears.

The underwriter may then submit **435** an approval or rejection response to the email form. Upon receiving the response, the document server and rules engine may generate **440** notification emails relaying the underwriter's response to the interested parties.

Other exemplary case types may include, for example and without limitation, insurance claims, new account applications, legal cases, medical cases, performance evaluations, policy and/or contract formations, new drug applications, regulatory compliance reviews and the like.

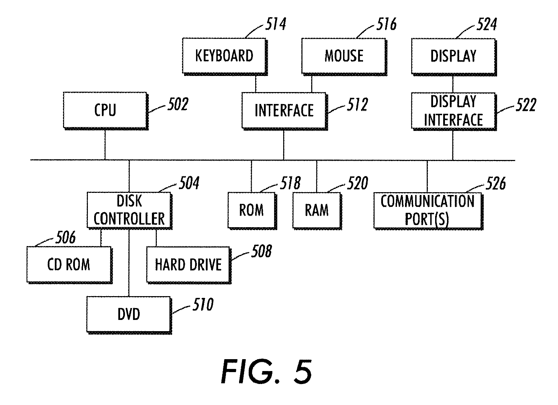

FIG. 5 is a block diagram of exemplary internal hardware that may be used to contain or implement program instructions according to an embodiment. Referring to FIG. 5, a bus **528** may serve as a main information highway interconnecting the other illustrated components of the hardware. CPU **502** is the central processing unit of the system, performing calculations and logic operations required to execute a program. Read only memory (ROM) **518** and random access memory (RAM) **520** constitute exemplary memory devices.

A disk controller **504** interfaces with one or more optional disk drives to the system bus **528.** These disk drives may be external or internal CD ROM drives **506,** hard drives **508** or DVD drives **510.** As indicated previously, these various disk drives and disk controllers are optional devices.

Program instructions may be stored in the ROM **518** and/or the RAM **520.** Optionally, program instructions may be stored on a computer readable medium such as a USB key or a digital disk or other recording medium, a communications signal or a carrier wave.

An optional display interface **522** may permit information from the bus **528** to be displayed on the display **524** in audio, graphic or alphanumeric format. Communication with external devices may optionally occur using various communication ports **526.** An exemplary communication port **526** may be attached to a communications network, such as the Internet or an intranet.

In addition to computer-type components and their equivalents, the hardware may also include an interface **512** which allows for receipt of data from input devices such as a keyboard **514** or other input device **516** such as a remote control, pointer and/or joystick.

A multiprocessor system may optionally be used to perform one, some or all of the operations described herein. Likewise, an embedded system may optionally be used to perform one, some or all of the operations described herein.

## Claims

1. A method of managing a case workflow, the method comprising:
receiving one or more first documents for a case at a case management system;
determining whether one or more second documents are required for the case;
if so, retrieving the one or more second documents; determining whether additional information is required for a case record, wherein the case record comprises the first and second documents;
if so:
transmitting an electronic notification message to an agent, wherein the electronic notification message contains a form, wherein the form comprises one or more response fields, wherein the form is written in a rules-based language that is interpretable by a computer system,
receiving an electronic response message from the agent in response to the electronic notification message, wherein the electronic response message contains response information entered into the one or more response fields,
updating the case record based on the response information, and
repeating the determining steps based on the updated case record; and
if not, providing notification that the case record is complete.

2. The method of claim 1 wherein the form is an XML form that is embedded in the electronic notification message.

3. The method of claim 1 wherein providing notification that the case record is complete comprises updating information in a work queue.

4. A system for managing a case workflow, the system comprising:
a processor;
a processor-readable storage medium in communication with the processor; and
a communication network in communication with the processor,
wherein the processor-readable storage medium contains one or more programming instructions for performing a method of managing a case workflow, the method comprising:
receiving one or more first documents for a case,
determining whether one or more second documents are required for the case,
if so, retrieving the one or more second documents,
determining whether additional information is required for a case record, wherein the case record comprises the first and second documents,
if so:
transmitting an electronic notification message to an agent, wherein the electronic notification message contains a form, wherein the form comprises one or more response fields, wherein the form is written in a rules-based language that is interpretable by a computer system,
receiving an electronic response message from the agent in response to the electronic notification message, wherein the electronic response message contains response information entered into the one or more response fields,
updating the case record based on the response information, and
repeating the determining steps based on the updated case record, and
if not, providing notification that the case record is complete.
